# EUROPÄISCHE PATENTSCHRIFT

(11) **EP 0 848 142 B1**
(45) Veröffentlichungstag und Bekanntmachung des Hinweises auf die Patenterteilung: **10.05.2000**
(21) Anmeldenummer: 97117354.7
(22) Anmeldetag: 08.10.1997
(51) Int. Cl.: F01N 3/20, B60K 13/04

(54) **Kraftfahrzeug mit einer Verbrennungskraftmaschine und Katalysator**
Motor vehicle with an internal combustion engine and catalytic converter
Véhicule automobile avec moteur à combustion interne et pot catalytique

(30) Priorität: 10.12.1996 DE 19651239
(43) Veröffentlichungstag der Anmeldung: 17.06.1998
(73) Patentinhaber: Ford Global Technologies, Inc., Dearborn, Michigan 48126-2490 (US)
(72) Erfinder: Phlips, Patrick, Dr., 50858 Köln (DE); Mayer, Thomas, 50859 Köln (DE); Krzykowski, Heinrich, 58313 Herdecke (DE); Grieser, Klemens, 40764 Langenfeld (DE)
(74) Vertreter: Messulam, Alec Moses

(56) Entgegenhaltungen:
- DE-A- 3 439 998
- DE-A- 4 218 834
- DE-U- 9 204 219

## Beschreibung

Die Erfindung betrifft ein Kraftfahrzeug mit einer im Frontbereich angeordneten Verbrennungskraftmaschine mit in Reihe angeordneten Zylindern, bei denen die Abgase über einen Katalysator zum Heckbereich des Fahrzeuges geführt werden, wobei die Abgasleitungen der einzelnen Zylinder auf einer Seite der Verbrennungskraftmaschine in einer Sammelleitung zusammengefaßt sind, von der zwei Zuleitungen mit unterschiedlichem Querschnitt zum Katalysator führen und die Zuleitung mit dem größeren Querschnitt durch ein Ventil absperrbar ist.

Eine Anordnung dieser Art geht aus der DE-OS 42 18 834 hervor. Hier ist bei einem in einem Kraftfahrzeug quer angeordneten Reihenmotor die Anordnung so getroffen, daß zwei Leitungen mit gleicher Länge, aber unterschiedlichem Querschnitt, von der Verbrennungskraftmaschine unmittelbar zum im hinteren Bereich des Kraftfahrzeuges angeordneten Katalysator geführt werden. In der Leitung mit dem größeren Querschnitt ist ein Absperrventil vorgesehen, wodurch in der Aufwärmphase die Leitung mit dem größeren Querschnitt abgesperrt und die Abgase lediglich durch die Leitung mit dünnerem Querschnitt dem Katalysator zugeführt werden. Dieses hat den Nachteil, daß die Führung der Leitungen infolge der in der Regel beengten Platzverhältnisse schwierig ist und die notwendige Länge der Abgasleitung mit geringerem Querschnitt zuviel Wärmeverluste mit sich bringt.

Zwar ist in der DE-OS 25 34 39 998 vorgesehen, bei zwei unterschiedlichen Zuleitungen der Abgase zum Katalysator die Zuleitungen in der Länge unterschiedlich auszubilden. Die Anordnung und Führung dieser Leitungen innerhalb des Kraftfahrzeuges ist jedoch schwierig und führt in der gezeigten Anordnung nicht zu den gewünschten Ergebnissen.

Aus DE-U-92 04 219 ist ein Kraftfahrzeug mit einer Verbrennungskraftmaschine mit in Reihe angeordneten Zylindern bekannt, bei dem die Abgase der Verbrennungskraftmaschine über einen Katalysator geführt werden. Die Abgasleitungen der einzelnen Zylinder sind auf einer Seite der Verbrennungskraftmaschine einer Sammelleitung zusammengefaßt, von der zwei Zuleitungen mit unterschiedlichem Querschnitt zum Katalysator führen und die Zuleitung mit dem größeren Querschnitt ist durch ein Absperrventil absperrbar. Die Zuleitungen weisen unterschiedliche Längen auf. Die Zuleitung mit dem größeren Querschnitt hat einen bogenförmigen Bereich und die Zuleitung mit geringerem Querschnitt stellt eine kurze Verbindung zwischen einem Bereich der Sammelleitung und einem dem Katalysator benachbarten Bereich der Abgasleitung her.

Es ist daher die Aufgabe der Erfindung, eine Anordnung für ein Kraftfahrzeug vorzuschlagen, die die Nachteile bekannter Anordnungen vermeidet und die bei guter Anordnungsmöglichkeit innerhalb des Kraftfahrzeuges eine rasche Aufheizung des Katalysators nach einem Start der Verbrennungskraftmaschine sicherstellt, ohne daß bei Dauerbetrieb des Kraftfahrzeuges die notwendige Kühlung für die Zuleitung der Abgase zum Katalysator unterbleibt. Dieses ist insbesondere bei Verbrennungskraftmaschinen vorteilhaft, die Magerverbrennungsverfahren anwenden.

Diese Aufgabe wird dadurch gelöst, daß die Zuleitungen für die Abgase zum Katalysator unterschiedliche Längen aufweisen, wobei die Zuleitung mit dem größeren Querschnitt, unterhalb der Verbrennungskraftmaschine in Fahrtrichtung des Kraftfahrzeuges vor und unter der Verbrennungskraftmaschine angeordnet, einen bogenförmigen Bereich aufweist und von dort die Abgasleitung entgegen der Fahrtrichtung zu dem unterhalb des Passagierraumes angeordneten Katalysator verläuft, wobei die Zuleitung mit dem geringeren Querschnitt eine kurze Verbindung zwischen einem Bereich der Sammelleitung nahe einem Entkopplungselement und einem dem Katalysator benachbarten Bereich der Abgasleitung herstellt. Außerdem ist die Verbrennungskraftmaschine mit den in Reihe angeordneten Zylindern quer zur Fahrtrichtung angeordnet und die Abgaskrümmer der Zylinder, in Fahrtrichtung gesehen, befinden sich hinter der Verbrennungskraftmaschine. Dadurch ergeben sich besonders günstige Raumverhältnisse und die Führung der Abgasleitungen wird vereinfacht.

Durch diese Anordnung wird erreicht, daß das sogenannte Package innerhalb des Kraftfahrzeuges für die Abgasleitung und den Katalysator positiv gelöst werden kann; die Verbindungsleitung mit dem größeren Querschnitt liegt in einem Bereich des Kraftfahrzeuges, in dem eine optimale Kühlung möglich ist. Trotzdem wird bei einer Inbetriebnahme des Kraftfahrzeuges durch Absperren der Zuleitung mit größerem Querschnitt die Zuleitung mit geringem Querschnitt, die zudem noch in kurzer Länge ausgeführt werden kann, für eine rasche Aufheizung des Katalysators sorgen.

In Ausgestaltung der Erfindung kann das Absperrventil der Verbindungsleitung mit größerem Querschnitt im Bereich des Bogens der Abgasleitung in Fahrtrichtung gesehen vor der Verbrennungskraftmaschine angeordnet sein; dadurch ergeben sich zusätzliche Kühlungsmöglichkeiten für diese Einrichtung, was für eine ordnungsgemäße Funktion wichtig ist.

Vorteilhaft ist dabei auch, dieses Absperrventil, in Strömungsrichtung der Abgase gesehen, vor oder hinter dem Bogen anzuordnen; abhängig davon, wo die besseren Kühlungsmöglichkeiten vorhanden sind.

Ein Ausführungsbeispiel der Erfindung ist in den Figuren dargestellt. Es zeigen:

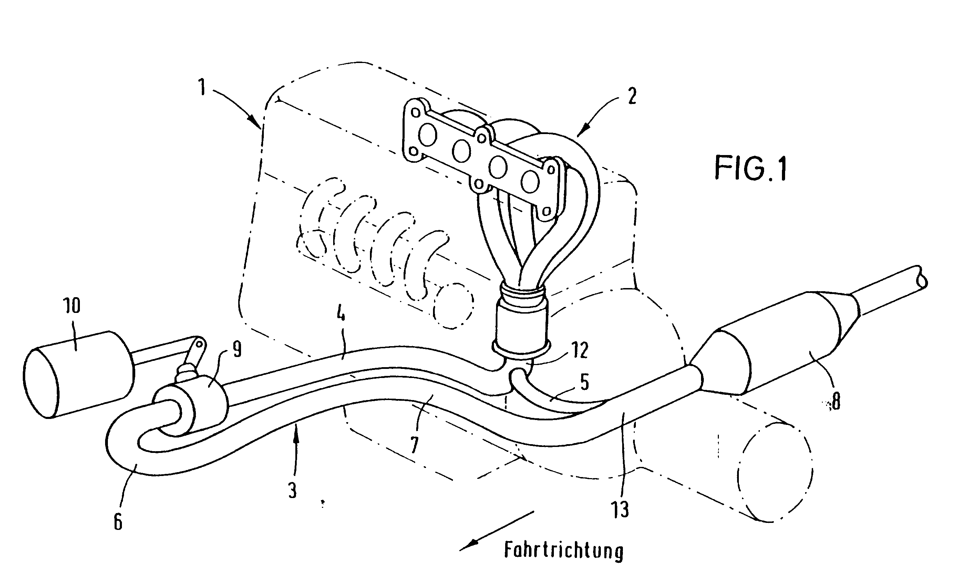

- Fig. 1: eine perspektivische Darstellung der erfindungsgemäßen Anordnung mit einer Verbrennungskraftmaschine und den Abgasleitungen von der Verbrennungskraftmaschine zum Katalysator;

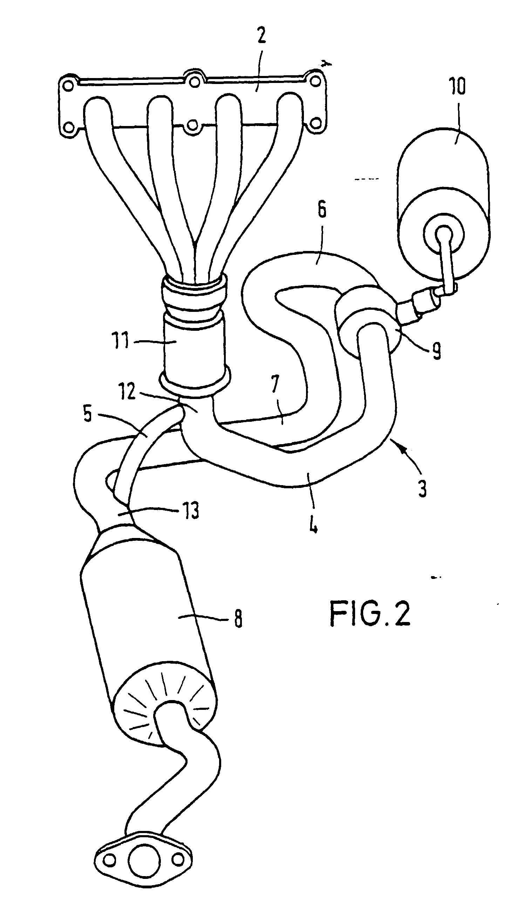

- Fig. 2: eine perspektivische Anordnung des erfindungsgemäßen Abgassystems;

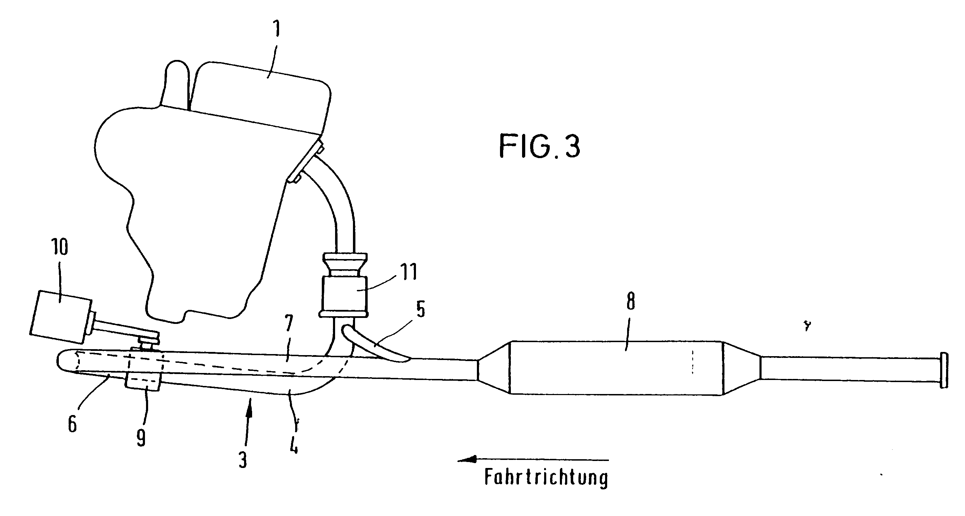

- Fig. 3: eine Seitenansicht der erfindungsgemäßen Anordnung innerhalb des vorderen Bereiches eines Kraftfahrzeuges.

Eine Verbrennungskraftmaschine 1 weist in Reihe angeordnete Zylinder auf; die Anordnung der Zylinderreihe erfolgt beim Ausführungsbeispiel, so wie in den Figuren dargestellt, quer zur Fahrtrichtung. Die Abgase der Verbrennungskraftmaschine werden über einen Abgaskrümmer 2 einem Entkopplungselement 11 zugeleitet. Von dort werden die Abgase über eine Abgasleitung, die insgesamt mit 3 bezeichnet ist, einem Katalysator 8 zugeführt. Dieser Katalysator kann auch eine Einrichtung zur Reduktion der NOx-Bestandteile der Abgase bei magerem Betrieb der Verbrennungskraftmaschine enthalten.

Kurz nach dem Entkopplungselement 11 ist eine Möglichkeit vorgesehen, die Abgase sowohl einer Zuleitung 4 mit größerem Durchmesser zuzuführen, als auch einer Zuleitung 5 mit kleinerem Durchmesser, die auf kurzem Wege die Abgase einem Bereich 13 der Abgasleitung zuführt. Dabei entnimmt die Zuleitung 5 die Abgase der Zuleitung 4 in einem Bereich 12. Der Bereich 13 liegt bevorzugt in Abschnitt 7 der Abgasleitung 3 kurz vor ihrer Einmündung in den Katalysator 8. Die Zuleitung 4 mit größerem Querschnitt verläuft dann in Fahrtrichtung zu einem bogenförmigen Bereich 6, der unterhalb der Verbrennungskraftmaschine 1 und in Fahrtrichtung gesehen vor der Verbrennungskraftmaschine 1 angeordnet ist. Die Weiterführung der Abgase erfolgt dann durch einen Abschnitt 7, der entgegen der Fahrtrichtung verläuft und die Abgase dem Katalysator 8 zuführt.

Vor dem bogenförmigen Bereich 6 der Abgasleitung 3 ist ein Absperrventil 9 vorgesehen, das zwischen der Zuleitung 4 und dem bogenförmigen Bereich 6 liegt. Das Absperrventil 9 wird durch eine Betätigungsvorrichtung 10 betätigt. Die Anordnung des Absperrventils kann insbesondere dann, wenn die Kühlverhältnisse dort besser sind, auch nach dem bogenförmigen Bereich 6 erfolgen.

Beim Starten der Verbrennungskraftmaschine 1 sorgt die Betätigungsvorrichtung 10 für das Absperrventil 9 zunächst dafür, daß die Zuleitung 4 geschlossen ist. Dadurch gelangen die Abgase über die Zuleitung 5 auf kurzem Wege zum Katalysator 8 und sorgen hier für eine rasche Aufheizung desselben. Abhängig von der Temperatur im Katalysator wird sodann über die Betätigungsvorrichtung 10 das Absperrventil 9 geöffnet, wodurch dann der Weg der Abgase über die Zuleitung 4, den bogenförmigen Bereich 6 und den Abschnitt 7 der Abgasleitung 3 frei wird. Da die Zuleitung 4 einen größeren Querschnitt aufweist als die Zuleitung 5, gelangt so der weitaus größere Teil der Abgase über die Zuleitung 4 und den bogenförmigen Bereich 6 zum Katalysator.

## Patentansprüche

1. Kraftfahrzeug mit einer im Frontbereich angeordneten Verbrennungskraftmaschine mit in Reihe angeordneten Zylindern, bei denen die Abgase über einen Katalysator zum Heckbereich des Kraftfahrzeuges geführt werden, wobei der Abgaskrümmer der einzelnen Zylinder auf einer Seite der Verbrennungskraftmaschine in eine Sammelleitung zusammengefaßt ist und in einer Abgasleitung weitergeführt wird, wobei von der Sammelleitung zwei Zuleitungen mit unterschiedlichem Querschnitt zum Katalysator führen und die Zuleitung mit dem größeren Querschnitt durch ein Ventil absperrbar ist, und die Zuleitungen (4, 5) unterschiedliche Längen aufweisen,
**dadurch gekennzeichnet,** daß
- die Zuleitung (4) mit dem größeren Querschnitt, unterhalb der Verbrennungskraftmaschine (1) in Fahrtrichtung des Kraftfahrzeuges vor und unter der Verbrennungskraftmaschine (1) angeordnet, einen bogenförmig Bereich (6) aufweist und von dort die Abgasleitung (3) entgegen der Fahrtrichtung zu dem unterhalb des Passagierraumes angeordneten Katalysator (8) verläuft,
- die Zuleitung (5) mit geringerem Querschnitt eine kurze Verbindung zwischen einem Bereich (12) der Sammelleitung und einem dem Katalysator (8) benachbarten Bereich (13) des Abschnittes (7) der Abgasleitung (3) herstellt,
- die Verbrennungskraftmaschine (1) mit in Reihe angeordneten Zylindern quer zur Fahrtrichtung angeordnet ist und der Abgaskrümmer (2) der Zylinder in Fahrtrichtung gesehen sich hinter der Verbrennungskraftmaschine (1) befindet,
- das Ventil als Absperrventil ausgeführt ist.

2. Kraftfahrzeug nach Anspruch 1,
**dadurch gekennzeichnet**, daß
das Absperrventil (9) im Bereich des Bogens (6) der Zuleitung (4) angeordnet ist.

3. Kraftfahrzeug nach Anspruch 2,
**dadurch gekennzeichnet,** daß
das Absperrventil (9) in Strömungsrichtung der Abgase gesehen vor dem Bogen (6) der Zuleitung (4) angeordnet ist.

4. Kraftfahrzeug nach Anspruch 2,
**dadurch gekennzeichnet,** daß
das Absperrventil (9) in Strömungsrichtung der Abgase gesehen hinter dem Bogen (6) angeordnet ist.

## Claims

1. Vehicle with a front-mounted internal-combustion engine with cylinders arranged in series, in which the exhaust gases are directed via a catalytic converter to the rear area of the vehicle, the exhaust gas elbow of the individual cylinders being combined on one side of the internal-combustion engine in a manifold and passed on in an exhaust duct, two supply ducts with different cross-sections leading from the manifold to the catalytic converter, and it being possible to shut off the supply duct with the greater cross-section by means of a valve, the supply ducts (4, 5) having different lengths
characterised in that
- the supply duct (4) with the greater cross-section, positioned below the internal-combustion engine (1), in front of and below the internal-combustion engine (1) in the direction of travel of the motor vehicle, has an arch-shaped area (6) and from there the exhaust duct (3) runs against the direction of travel to the catalytic converter (8) which is situated below the passenger area,
- the supply duct (5) with the smaller cross-section forms a short link between an area (12) of the manifold and an area (13) of the section (7) of the exhaust duct (3) which is adjacent to the catalytic converter (8),
- the internal-combustion engine (1), with cylinders arranged in series, is positioned transversely to the direction of travel and the exhaust gas elbow (2) of the cylinders is situated behind the internal-combustion engine (1), viewed in the direction of travel,
- the valve is configured as a stop valve.

2. Motor vehicle according to claim 1,
characterised in that
the stop valve (9) is positioned in the area of the arch (6) in the supply duct (4).

3. Motor vehicle according to claim 2,
characterised in that
the stop valve (9) is positioned in front of the arch (6) in the supply duct (4), viewed in the direction of flow of the exhaust gases.

4. Motor vehicle according to claim 2,
characterised in that
the stop valve (9) is positioned behind the arch (6), viewed in the direction of flow of the exhaust gases.

## Revendications

1. Véhicule automobile avec un moteur à combustion interne disposé dans la région avant et doté de cylindres disposés en ligne, dont les gaz d'échappement sont dirigés vers la région arrière du véhicule en passant par un catalyseur, le collecteur d'échappement des cylindres individuels étant regroupé en une conduite collectrice sur un côté du moteur à combustion interne et se poursuivant par une conduite d'échappement, deux conduites d'amenée de sections différentes menant de la conduite collectrice au catalyseur et la conduite d'amenée de plus grande section pouvant être isolée par une soupape, et les conduites d'amenée (4, 5) présentant des longueurs différentes,
**caractérisé** en ce que
- la conduite d'amenée (4) de plus grande section présente, en dessous du moteur à combustion interne (1), une région coudée (6) disposée en dessous et en avant du moteur à combustion interne (1) dans la direction de marche du véhicule, région d'où la conduite d'échappement (3) s'étend, à l'encontre de la direction de marche, vers le catalyseur (8) disposé en dessous de l'habitacle,
- la conduite d'amenée (5) de plus petite section réalise une courte liaison entre une région (12) de la conduite collectrice et une région (13) du tronçon (7) de la conduite d'échappement (3) qui est voisine du catalyseur (8),
- le moteur à combustion interne (1) est disposé avec des cylindres en ligne transversalement à la direction de marche, et le collecteur d'échappement (2) des cylindres se trouve, considéré dans la direction de marche, en arrière du moteur à combustion interne (1),
- la soupape est réalisée sous forme de soupape d'isolement.

2. Véhicule automobile selon la revendication 1, **caractérisé** en ce que la soupape d'isolement (9) est disposée dans la région du coude (6) de la conduite d'amenée (4).

3. Véhicule automobile selon la revendication 2, **caractérisé** en ce que la soupape d'isolement (9) est disposée, considérée dans la direction d'écoulement des gaz d'échappement, avant le coude (6) de la conduite d'amenée (4).

4. Véhicule automobile selon la revendication 2, **caractérisé** en ce que la soupape d'isolement (9) est disposée, considérée dans la direction d'écoulement des gaz d'échappement, après le coude (6).
